# EUROPÄISCHE PATENTANMELDUNG

(11) **EP 4 361 459 A1**
(43) Veröffentlichungstag der Anmeldung: **01.05.2024**
(21) Anmeldenummer: 22204159.2
(22) Anmeldetag: 27.10.2022
(51) Int. Cl.: F16B 25/00

(54) **SCHRAUBE**

(71) Anmelder: SPAX International GmbH & Co. KG, 58256 Ennepetal (DE)
(72) Erfinder: LANGEWIESCHE, Frank, 58256 Ennepetal (DE); Romanko, Jacek, 58256 Ennepetal (DE)
(74) Vertreter: Schneider, Sascha

(57) **Zusammenfassung**

Vorgeschlagen wird eine Schraube (1), aufweisend ein Gewinde (3) und eine konisch zulaufende Spitze (4), wobei hinter der Spitze ein zylindrisch ausgebildeter Schaft (5) ausgebildet ist, wobei hinter dem Schaft eine Verdickung (6) angeordnet ist.

## Beschreibung

Die Erfindung betrifft eine Schraube gemäß dem Patentanspruch 1.

Im Stand der Technik existieren Schrauben, insbesondere Holzschrauben, in unterschiedlichen Variationen. Allerdings weisen herkömmliche Schrauben folgende Nachteile auf.

Beim Einschrauben herkömmlicher Schrauben in das Material verursachen diese ein nachteiliges Reißen des Holzes. Außerdem entsteht bei herkömmlichen Schrauben eine hohe Reibung beim Einbringen der Schrauben.

Es ist daher die Aufgabe der vorliegenden Erfindung, die Nachteile des Stands der Technik zu beseitigen.

Gelöst wird diese Aufgabe mit dem Gegenstand der unabhängigen Ansprüche. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. In den angegebenen Wertebereichen sollen auch innerhalb der genannten Grenzen liegende Werte als Grenzwerte offenbart und in beliebiger Kombination beanspruchbar sein.

Die Erfindung betrifft eine Schraube, insbesondere Holzschraube, aufweisend ein Gewinde und eine konisch zulaufende Spitze, wobei hinter der Spitze ein zylindrisch ausgebildeter Schaft ausgebildet ist, wobei hinter dem Schaft eine Verdickung angeordnet ist.

Dadurch, dass hinter der Spitze ein zylindrischer Schaft und eine Verdickung angeordnet ist, ist es vorteilhaft möglich, dass das Material, insbesondere das Holz, in das die Schraube eingeschraubt wird, durchtrennt wird und ein Reißen des Materials, insbesondere des Holzes, verringert wird.

Die Schraube weist auf herkömmliche Weise eine Längsachse auf. Entlang dieser Längsachse erstreckt sich die Schraube von einem Kopf mit einem Kraftangriff bis hin zur Spitze.

Die Merkmale "hinter" und "vor" sind derart definiert, dass der hintere Teil der Schraube mit dem Kopf versehen ist und der vordere Teil der Schraube mit der Spitze versehen ist.

Das Merkmal, dass der zylindrische Schaft hinter der Spitze angeordnet ist, ist derart so zu verstehen, dass sich der zylindrische Schaft von der vorderen Spitze aus gesehen in Längsrichtung hinter der Spitze befindet.

Die Begriffe "Gewindetiefe" und "Steigung des Gewindes" sind für den Fachmann bekannt.

Das Gewinde erstreckt sich auf herkömmliche Weise zwischen dem Kopf und der Spitze. Zwischen dem Kopf und dem Gewinde kann sich ein weiterer zylindrischer Schaft befinden, der einen Durchmesser aufweist, der größer ist als der Kerndurchmesser des Gewindes. Das Merkmal des Kerndurchmessers des Gewindes ist dem Fachmann aus dem Stand der Technik bekannt.

Das Gewinde kann sich auf herkömmliche Weise bis zum vorderen Ende der Spitze erstrecken. Alternativ kann am vorderen Ende der Spitze ein Bereich angeordnet sein, an dem kein Gewinde vorhanden ist.

In einer bevorzugten Ausführungsform ist vorgesehen, dass die Verdickung zylindrisch, insbesondere ringförmig, insbesondere kreisringförmig, ausgebildet ist.

Alternativ kann es vorgesehen sein, dass die Verdickung konisch ausgebildet ist, wobei bevorzugt die Verdickung zur Spitze hin breiter wird.

Im Allgemeinen kann die Verdickung auch andere ballige Formen aufweisen.

In einer anderen bevorzugten Ausführungsform ist vorgesehen, dass hinter dem Schaft eine Stufe angeordnet ist, wobei bevorzugt die Stufe in einem Winkel von 60° bis 120° zur Schraubenlängsachse angeordnet ist, wobei besonders bevorzugt die Stufe senkrecht zur Schraubenlängsachse angeordnet ist.

Durch das Vorsehen einer Stufe ist es vorteilhaft möglich, dass das Holz beim Einschrauben durch die Stufe aufgeweitet wird, so dass die Reibung beim weiteren Einschrauben der Schraube verringert werden kann.

In einer anderen bevorzugten Ausführungsform ist es vorgesehen, dass ein Durchmesser der Verdickung zwischen 10 % und 50 % einer Gewindetiefe des Gewindes beträgt.

In einer anderen bevorzugten Ausführungsform ist es vorgesehen, dass die Verdickung in Richtung der Schraubenlängsachse eine Länge aufweist, wobei die Länge kleiner ist als das 5fache einer Steigung des Gewindes.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen jeweils in schematischer Ansicht:
Figur 1a zeigt schematisch eine erfindungsgemäße Schraube gemäß einer ersten Ausführungsform,
Figur 1b zeigt einen Ausschnitt der Schraube aus Figur 1a, wobei die Schraube um die Längsachse um 120° im Uhrzeigersinn gedreht worden ist,
Figur 1c zeigt den Ausschnitt der Schraube aus Figur 1b, wobei die Schraube um 120° im Uhrzeigersinn um die Längsachse gedreht worden ist,
Figur 2a zeigt schematisch eine erfindungsgemäße Schraube gemäß einer zweiten Ausführungsform,
Figur 2b zeigt analog Figur 1b einen Ausschnitt der Schraube aus Figur 2a, wobei die Schraube entlang der Längsachse um 120° im Uhrzeigersinn gedreht worden ist,
Figur 2c zeigt analog Figur 1c den Ausschnitt der Schraube aus Figur 2b, wobei die Schraube um 120° im Uhrzeigersinn entlang der Schraubenlängsachse gedreht worden ist.

In den Figuren sind Vorteile und Merkmale der Erfindung mit diese jeweils identifizierenden Bezugszeichen gemäß Ausführungsformen der Erfindung gekennzeichnet, wobei Bauteile beziehungsweise Merkmale mit gleicher oder gleichwirkender Funktion mit identischen Bezugszeichen gekennzeichnet sind.

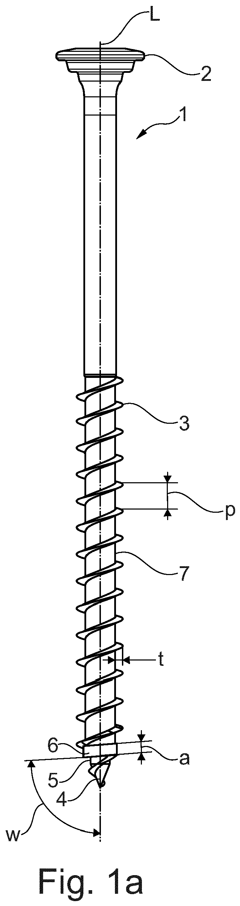

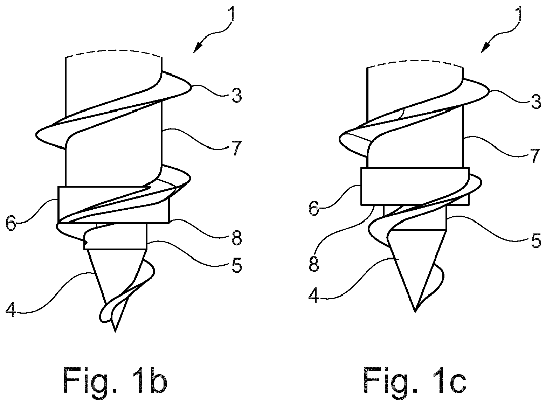

Die Figuren 1a, 1b und 1c zeigen schematisch eine erfindungsgemäße Schraube 1 gemäß einer ersten Ausführungsform der Erfindung.

Die Schraube 1 erstreckt sich entlang einer Schraubenlängsachse L. Am hinteren Ende der Schraube befindet sich ein Kopf 2 mit einem herkömmlichen Kraftangriff für ein geeignetes Betätigungswerkzeug.

Vor dem Kopf befindet sich ein zylindrisch ausgebildeter Schaft, mit einem Durchmesser, wobei der Durchmesser dieses Schaftes größer ist als ein Kerndurchmesser eines Gewindes 3, welches in einem Bereich 7 angeordnet ist. Der Bereich 7 mit dem Gewinde 3 befindet sich in Längsrichtung L gesehen vor dem zylindrischen Schaft. Zwischen dem zylindrischen Schaft und dem Bereich 7 mit dem Gewinde 3 ist eine Fase angeordnet, so dass sich der breitere Durchmesser des Schaftes auf den Kerndurchmesser des Gewindes 3 im Bereich 7 verjüngt.

Das Gewinde 3 weist eine Steigung P auf. Außerdem weist das Gewinde 3 eine Gewindetiefe t auf.

Weiterhin erstreckt sich die Schraube 1 bis hin zu einem vorderen Ende, an dem sich eine konisch zulaufende Spitze 4 befindet.

Hinter der Spitze 4 erstreckt sich ein zylindrischer Schaft 5, dessen Länge a kleiner ist als die Steigung P des Gewindes 3.

Hinter dem zylindrischen Schaft 5 ist eine zylindrisch ausgebildete Verdickung 6 angeordnet, wobei die Länge a der Verdickung 6 kleiner ist als die Steigung P.

Zwischen dem zylindrischen Schaft 5 und der zylindrischen Verdickung 6 ist eine Stufe 8 angeordnet, wobei diese Stufe 8 in einem Winkel in diesem Ausführungsbeispiel von 90° zur Längsachse L angeordnet ist.

Hinter der zylindrischen Verdickung 6 befindet sich der Bereich 7 mit dem Gewinde 3, wobei der Kerndurchmesser des Gewindes 3 geringer ist als der Durchmesser der Verdickung 6.

In diesem Ausführungsbeispiel erstreckt sich das Gewinde 3 in Längsrichtung L über die Verdickung 6 hinaus und auch über den zylindrischen Schaft 5 bis hin zum vorderen Ende der Spitze 4. Detailansichten und verdrehte Ansichten sind in den Figuren 1b und 1c sichtbar.

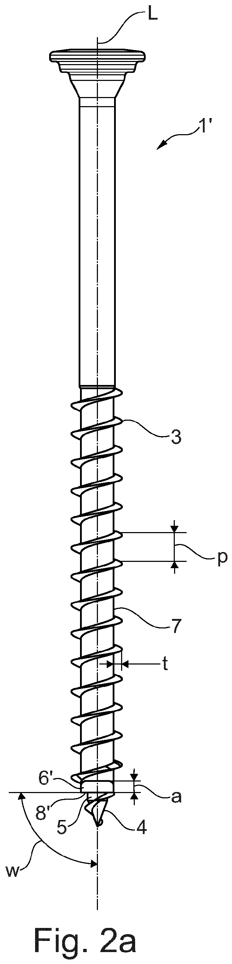

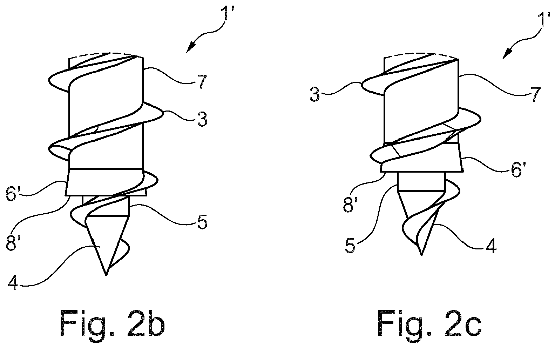

Die Figuren 2a, 2b und 2c zeigen schematisch eine zweite erfindungsgemäße Ausführungsform der vorliegenden Erfindung.

Die Schraube 1' erstreckt sich entlang einer Schraubenlängsachse L wie auch in der ersten Ausführungsform von einem Kopf 2 mit einem Kraftangriff bis hin zu einer konisch zulaufenden Spitze 4 im vorderen Bereich der Schraube 1'.

Die meisten Merkmale in der zweiten Ausführungsform sind analog zu den Merkmalen und Beschreibung der ersten Ausführungsform gegeben. Folgende Unterschiede weist die zweite Ausführungsform im Vergleich zur ersten Ausführungsform auf.

Wie auch die erste Ausführungsform, weist die Schraube 1' eine Verdickung 6' auf. Im Unterschied zur ersten Ausführungsform ist die Verdickung 6' konisch aufweitend ausgebildet, wobei der Durchmesser der Verdickung 6' in Richtung der Spitze größer wird. Die konische Verdickung 6' beginnt somit in ihrem hinteren Bereich mit dem Durchmesser des Kerndurchmessers des Gewindes 3 und weitet sich bis hin zu einem größeren Durchmesser auf.

Wie auch in der ersten Ausführungsform, befindet sich hinter der Spitze 4 der zylindrische Schaft 5 mit einer Erstreckung in Längsrichtung L kleiner als die Steigung P des Gewindes 3.

Zwischen dem zylindrischen Schaft 5 und der Verdickung 6' befindet sich wie auch in der ersten Ausführungsform eine Stufe 8', wobei sich die Stufe 8' in einem Winkel von 90° zur Längsachse L erstreckt.

Die Verdickung 6' erstreckt sich in Längsrichtung L entlang einer Länge a, wobei die Länge a in diesem Ausführungsbeispiel kleiner ist als die Steigung P des Gewindes 3.

Im Übrigen wird auf die Ausführungen zur ersten Ausführungsform verwiesen.

Die Figuren 2b und 2c zeigen verdrehte Ansichten des vorderen Bereichs der Schraube 1' mit der Spitze 4.

Die zuvor dargestellten Ausführungsbeispiele dienen lediglich der Illustration der Erfindung und dem besseren Verständnis der grundlegenden Idee. Die Ausführungsbeispiele sollen auf keinen Fall den allgemeinen Erfindungsgedanken beschränken.

### Bezugszeichenliste

- 1,1': Schraube
- 2: Kopf
- 3: Gewinde
- 4: Spitze
- 5: zylindrischer Schaft
- 6,6': Verdickung
- 7: Bereich
- 8,8': Stufe

- L: Schraubenlängsachse
- P: Steigung
- t: Gewindetiefe
- a: Länge
- w: Winkel

## Patentansprüche

1. Schraube (1,1'), insbesondere Holzschraube, aufweisend ein Gewinde (3) und eine konisch zulaufende Spitze (4), **dadurch gekennzeichnet, dass** hinter der Spitze (4) ein zylindrisch ausgebildeter Schaft (5) ausgebildet ist, wobei hinter dem Schaft (5) eine Verdickung (6,6') angeordnet ist.

2. Schraube (1,1') nach Anspruch 1, wobei die Verdickung (6) zylindrisch, insbesondere ringförmig, insbesondere kreisringfömig, ausgebildet ist.

3. Schraube (1,1') nach Anspruch 1, wobei die Verdickung (6') konisch ausgebildet ist, wobei bevorzugt die Verdickung (6') zur Spitze (4) hin breiter wird

4. Schraube (1,1') nach mindestens einem der vorhergehenden Ansprüche, wobei hinter dem Schaft (5) eine Stufe (8,8') angeordnet ist, wobei bevorzugt die Stufe (8,8') in einem Winkel (w) von 60°-120° zur Schraubenlängsachse (L) angeordnet ist, wobei besonders bevorzugt die Stufe (8,8') senkrecht zur Schraubenlängsachse (L) angeordnet ist

5. Schraube (1,1') nach mindestens einem der vorhergehenden Ansprüche, wobei ein Durchmesser der Verdickung (6,6') zwischen 10 % und 50 % einer Gewindetiefe (t) des Gewindes (3) beträgt.

6. Schraube (1,1') nach mindestens einem der vorhergehenden Ansprüche, wobei die Verdickung (6,6') in Richtung der Schraubenlängsachse (L) eine Länge (a) aufweist, wobei die Länge (a) kleiner ist als das 5fache einer Steigung (P) des Gewindes (3).
